# EUROPEAN PATENT APPLICATION

(11) **EP 2 077 521 A1**
(43) Date of publication of application: **08.07.2009**
(21) Application number: 08386022.1
(22) Date of filing: 25.09.2008
(51) Int. Cl.: G06Q 20/00

(54) **Systems and methods of carrying out internet transactions with transparently provided security**

(30) Priority: 27.09.2007 GR 20070100592
(71) Applicant: Tsangaris, Nicos, 2064 Nicosia (CY)
(72) Inventor: Tsangaris, Nicos, 2064 Nicosia (CY)

(57) **Abstract**

The invention refers to systems, methods and protocols for the handling and carrying out of internet transactions which are realized between the participating entities which may be the Final User (FU) who desires to carry out the transaction, the Provider of Transactions (PT) who provides the transaction and the Controller of Validity of Transaction (CVT) who ensures the validity of the transactions and the proper functioning of the system as a whole. The carrying out of transactions through systems, methods and protocols consistent with the invention ensures that in the communication between the information systems of FU (ISoFU) and of CVT (ISoCVT) the confidentiality and integrity of the exchanged data are retained, the identity of the two parties is certified (mutual authentication) and the attribute of non repudiation of the acceptance of the transaction by the FU exists. These features along with the protection against the well known types of internet attacks and with the security in general which is provided, are provided transparently with the minimum participation of the FU and without any specialized knowledge of any level being required from him. For this to be achieved, a Secure Processing Unit (SPU) with capabilities for secure storage and processing of sensitive data is used. For the carrying out of some transaction by some FU the production of specific unique data (Confirmation Data) is required. These data have such form that only the SPU is in a position to create them and the ISoCVT through their processing to check the validity and the right to carry out of the specific transaction. The authorization to the SPU for their production is provided through the introduction by the FU into his system of specific data (Authorizing Data) which are in its exclusive jurisdiction. As regards the certification of the identity of the valid entities, this is done solely algorithmically and no participation at all and no control by the FU is required. The communication between the ISoFU and ISoCVT is carried out through a two-way internet communication channel which is kept open by the ISoFU.

Also a method is proposed where the adoption of the characteristics as they are described above is achieved through the secure sharing of common secrets between the ISoCVT and each one of the SPU of the FUs in conjunction with the use of the attributes of both the symmetrical cryptography and the reverse hash chains. In the specific method with the exemption of the realization of one digital signature (use of the costly public key infrastructure) in the first transaction with the use of each SPU, the very efficient hash functions and symmetrical encrypting algorithms are solely used, contributing to clearly reduced needs for processing power on the part of the ISoCVT. In the carrying out of the transactions there is a minimum number of communication steps with a minimum volume of communication data.

## Description

### TECHNICAL FIELD

The invention refers to systems, methods and protocols for management and carrying out of internet transactions which take place between entities participating in the system.

### BACKGROUND

The rapid increase in the number of internet users in the last decade has led to a corresponding increase in the demand for the systems of carrying out internet transactions and the requirements from these systems both in matters of friendliness, easy use and efficiency and mainly in matters of safety. In these systems there are sensitive data which are critical to the safety of users and it is necessary that appropriate measures should be taken to prevent their theft given that their knowledge makes it possible to a malicious user to exploit the system and the lawful users successfully pretending to be himself the lawful user.

There are various kinds of fraud and many attacks which may be carried out in the internet environment. The most basic are summarily the following:
- Packet sniffing attack - Some eavesdropper watches the IP packages circulating in the internet. If information critical to safety is transferred without encryption it can be collected and used.
- Replay attack - Use of data from previous communication for the commission of fraud,. e. g. some transaction requires a password which is sent encrypted to make sure that it will not revealed to an eavesdropper, the eavesdropper uses the collected message which is the password coded and commits the fraud though he does not know the password itself.
- Impersonation - The fraudster pretends to be someone else so that the victim may trust him and reveal information of critical importance to security.
- Man in the middle attack - In this attack the fraudster interposes himself between the victim and a trusted entity and operates as intermediate in an absolutely normal in all other respects transaction. The fraudster as intermediate starts the process of transaction with the victim pretending to be the trusted entity and with the trusted entity pretending to be the victim. He thus gains information critical to safety without the victim suspecting anything. It is an attack similar to simple impersonation but with greater force since even in the case where the trusted entity should prove its identity this does not prevent the commission of the fraud.
- Malicious software - In some ways the fraudster succeeds in installing malicious software in the personal computer of the victim. The malicious software gathers information critical to safety and conveys it to the fraudster.
- Dictionary attack - In cases where the user's name and password are used for authorizing a transaction it has been observed that the passwords chosen by most users belong to a quite small sub-total of all the possible combinations. (they practically consist of words which are often used in every day life). A system which bases its safety on passwords chosen by the user is vulnerable to dictionary attacks where the fraudster chooses randomly one of the possible words and uses it as password repeating the accidental choice until he finds the password. The most usual manner of preventing this kind of attack is achieved through the checking and freezing of the transactions for the corresponding name in case of 3 or 4 continuing wrong introductions of password. But there is also another case of commission of this form of attack. The codes are stored in a data base in the information system of one of the valid entities. The most usual manner (economical, efficient and safe) to store them is in encoded form through the use of a one way hash function. But as the passwords as chosen by the user have their shortcomings, which are mentioned above, they remove the safety which in other conditions the hash functions would have offered. Consequently, if a fraudster gains access to such a data base he can decrypt the passwords through the dictionary attack.
- A security rift in the information system of a trusted entity - In the management and carrying out of internet transactions systems there is a trusted entity which has stored in its information system information about the sensitive data of the rest of the entities. Since this information is critical the security of this information system is tantamount to the security of the system as a whole. There are various methods to create a rift in an information system. Unauthorized access can be gained either from a distance (through the internet by a hacker) or even through physical presence (e.g. by breaking into the offices of the entity). There is also the possibility of inside complicity where an employee through lawful accession obtains data which he then uses in an illegal activity at the expense of the users and of the system. To prevent the rift in the security of an information system is one of the most difficult parts in a security management system policy to implement and is more difficult the more complicated this information system is. In the past there have been successful attacks on such information systems, and some recent cases are indicatively mentioned: In July 2005 an unknown hacker violated the internal information system of the retail trade company TJX which runs 2,500 shops in the USA and gained access to the particulars of 45,7 million cards, the fraud was spotted only 1,5 years later without the exact manner in which the hacker operated being found out. In May 2005 a fraud was spotted in which the hacker managed to gain access to the information system of the CardSystems Solutions Inc, a company that provides payment services. Within an undefined period he managed to install malicious software in the information system which made it possible for him to obtain particulars of credit cards from more than 40 million cards. In 2003 a similar fraud scenario was carried out at the expense of the company Data Processors International with 8 million affected cards.
- Social Engineering - In a system the weakest point is often the human factor. One of the ways to obtain data critical to security (e.g. some password) most popular with fraudsters is to deceive users. In some way the fraudster convinces the victim to confide to him the critical data (e.g. by pretending to be a trusted entity) which he subsequently uses in order to commit the fraud.

The internet, which has been created for an entirely different purpose, was not technologically capable of providing the desirable levels of security. In order to ensure the desirable level of security the use of technologies from the area of cryptography and more specifically the use of the SSL/TLS protocols has been chosen. At this moment these protocols are used practically in all the transactions in which sensitive data move and are accessible through the internet. In this way it is ensured that the data of the communication are transferred encoded and are accessible only by the two parties of the communication.

Nevertheless, this is not enough for the safeguarding of the transaction. There are 2 different categories of problems which affect the level of security in the use of these protocols:

Certification of the identity of the valid entities of the system - In addition to the safeguarding of the confidentiality of the communication to which sensitive data are transferred through their encryption, it is essential that the identity of the recipient should be certifieded and it should be established that he is indeed the one with whom the communication is desirable. Technologically this is feasible through the specific cryptographic protocols which are based on the development of the public key infrastructure (PKI) for the supply of such certification services. It is necessary, however, that this checking of the certification which should be carried out by the user includes checking of the existence of the right url and actions which presuppose specialized knowledge of checking digital certificates (e.g. choice of its acceptance or not in case there are some errors) with the result that the usability of the service is drastically reduced. Moreover, in most of the systems carrying out internet transactions 3 entities participate, one of which desires the carrying out of the internet transaction, one which provides the internet transaction and one which processes the sensitive data in order to ensure the validity of the internet transaction. In these systems the sensitive data are used in the communication of the 1 st with the 3rd entity, respectively, over the SSL/TLS protocols. However, for this communication to start it is necessary that it should be preceded by the mediation of the 2nd entity which, whether it takes place on the cryptographic protocols or not, it is necessary that an additional checking should be carried out by the user to verify the credibility of the specific entity and checking to verify the existence of the right url.

Personal Computer (PC) security - One of the most important aspects of the definition of the user's security is also the protection of his personal computer. There are malicious programs, which record the actions of the victim and collect the sensitive data before they are encoded and subsequently send them to their creators and also malicious programs which may gain control of the victim's computer with the corresponding consequences. For the purpose of minimizing the possibilities of a fraud being committed at the expense of a user he himself should make use of some specific program of protection against the trojans, viruses etc. and which should be updated on a daily basis. Also it is necessary that the operating system and all the software which are used to be updated and upgraded. It is also essential that all the installed software should come from authentic sources.At the World Economic Forum held at Davos in 2007 this need was underlined since, as it was indicatively stated by John Mark, in China, half of the non authentic Microsoft windows programs which are circulated have a virus incorporated in them, which attacks the system from the outset upon its installation. For all these actions the user himself is responsible and absolutely competent - all the systems which offer the capability of internet transactions contain in the conditions of their agreement with the user a relevant condition which makes him exclusively responsible in cases of commission of a fraud which is due to these reasons.

For increasing the level of the security which is provided, the one time password (OTP) technology has been developed which is used mainly in electronic banking. Generally the systems which support this technique for the certification of entities and the authorization of carrying out transactions, in addition to the use of the SSL/TLS protocols, one time passwords are used. This requires the existence of a special device for the production of these passwords or the existence of corresponding software for the production of the passwords installed in the information systems of the users. In some cases the sequence of the passwords which are produced depends also on the time of their production. In this way even if a fraudster manages to fool the user and collect the password he will be able to use it only in one transaction and within a specified time frame and on condition that the lawful user will not use it first. But this does not exactly eliminate the problem but simply limits the effects to only one transaction. Despite the limitation the problem remains and this is proved also by the recent attempts to carry out attacks on such systems: In October 2005 fraudsters sent massive e-mail messages to the holders of accounts in Nordea bank which is active in Scandinavian countries supporting access to its services through the use of the OTP technology. The messages directed users to an internet location which was under the control of the hackers who would stage the impersonation attack. Nordea was forced to shut the system for 12 hours and this had the corresponding economic cost due to lost transactions but also the cost from the blow to its credibility which it is difficult to estimate. There was a similar case also in Citibank in July 2006 through an e-mail message which warned about an alleged attempt at an unauthorized access to the customers' accounts inducing them to connect through an internet link to their accounts for confirmation of their particulars. Generally for the certification of the identity of the valid entities of the system the use of the expensive (from the point of view of operations and bandwidth) PKI is required and for the safeguard of personal computers the users themselves are exclusively responsible. As regards the public key infrastructure, GeoTrust (White Paper 4/2005, "Vulnerability of First-Generation Digital Certificates and Potential for Phishing Attacks and Consumer Fraud) says that there are shortcomings and describes ways and examples of creation of problems as a result of these shortcomings and spots the problem in the structure of the digital certificates which are used and also in the existence of Certificate Authorities which do not meet the required criteria. As regards the protection of the personal computers of users, according to researches, a significant percentage of internet users do not use updated anti-virus protection programs. This is gathered also from the recent report of Symantec on internet threats (3/2007, Symantec Internet Security Threat Report Volume X) where the number of infected computers which have been turned into tools of organized hackers without the knowledge of the users increased by 29% within six months and reached a total of six million. Indicative of the aggravation of the problem is the fact that the competition among the internet cyber crimes is so acute that the sale prices of stolen sensitive data have gone down dramatically.

For the facing of problems in both categories the active participation of the user and the existence of specialized knowledge is, as already stated above, required. This however, is a serious disadvantage which makes practically non feasible the existence of the desirable security level. A recent research by Schechter S., Djamija R1., Ozment A. & Fischer I ("The Emperor's New Security Indicators: An evaluation of website authentication and the effect of role playing on usability studies", IEEE Symposium pnm Security and Privacy May 20-27, 2007 Oakland California) has proved that even the most simple checking which may be required by the average user it cannot be taken for granted that it secures the security levels of a system. In one of the scenarios of the research the user's reaction in case where the communication for the supply of sensitive data would not be carried out over the SSL/TLS protocols was audited (the checking of their existence is very simple either by examining the url where it should start with https or by checking the lower right part of the web browser where the image of the lock should appear). The result was unexpected, despite the absence of the protocols, none of the group of the sample considered stopping the effort to gain access to his bank account.

Also official statistical evidence of the European Static service Eurostat shows the importance of the security factor to European citizens. The concern about the security level is among the most important reasons for the non carrying out of electronic commerce among European consumers and even among consumers who have carried out internet purchases, almost one in every two has as his main concern the security level which is offered (European Commission 2004 "ISSUES RELATING TO BUSINESS AND CONSUMER E-COMMERCE", Special Eurobarometer 60.0/Wave 201- European Opinion Research Group EEIG).

### ADVANTAGES OF THE INVENTION

Apart from the proprieties of authentication, integrity, confidentiality, authorization and non repudiation which are essential in a system of carrying out and managing internet transactions there is another critical propriety to which no due importance has been attached and which is of critical importance (as it is confirmed also by the research referred to above). Transparency regarding the final user in the process of carrying out of the transactions. In the invention the most basic propriety is the transparently provided security. The user does not need to have specialized knowledge at all nor is his active participation required for achieving a high level of security. His participation is limited to self evident actions, expressing a desire for the carrying out of the transaction and the acceptance of its carrying out. The security vis-à-vis the already well known attacks such as those described above is dealt with automated processes through the proprieties of the systems and the methods which are consistent with the invention. The same applies to the certification of the valid entities. As regards the protection of personal PCs of the users there are two basic ways of exploitation in the case of the non right facing of this problem. One is the installation of a malicious software which collects the data introduced by the user into his PC and sends them to the malicious user and the other is the extraction of data from the storage space of his personal computer through the execution from a distance of commands by the malicious user and their forwarding to him. In the invention the carrying out of an attack in the specific ways does not have consequences and does not create a rift in the security of the system and the users, as the access to sensitive data as a result of such actions is not possible. Also some methods of carrying out internet transactions are proposed in which the essential features of these systems are transparently achieved and moreover this is achieved without the use of the expensive PKI with the corresponding results regarding efficiency and the decrease of cost. The invention offers all the above-mentioned advantages without any decrease of usability, simplicity and friendliness of the system being required.

### BRIEF DESCRIPTION OF THE DRAWINGS

In Fig.1 the steps for carrying out an internet transaction in which 3 entities participate are shown.
In Fig. 2 the structure of a Secure Processing Unit is shown through a simplified diagram.
In Fig.3 the structure of an Evolved Secure Processing Unit is shown through a simplified diagram
In Fig. 4 a system of carrying out internet transactions in which a Secure Processing Unit and the abilities of communication among its units are represented..
In Fig. 5 a variant of the system of Fig.4 regarding the manner of communication between its units is represented.
In Fig. 6 a system of carrying out internet transactions in which an Evolved Secure Processing Unit and the abilities of communication among its units are represented.
In Fig. 7 a variant of the system of Fig. 6 is represented.
In Fig. 8 a variant of the system of Fig. 7 is represented
In Fig. 9 a proposed method of shaping the data of the FU-CVT communication during the carrying out of a transaction is represented so that the proprieties of the systems which are consistent with the invention may be preserved.
In Fig. 10 the required preparatory work so that the transactions may be carried out through the use of the method shown in Fig. 9 is represented.

### DISCLOSURE OF INVENTION

For easier description and for facilitating the understanding of the invention a specific terminology is used. The purpose of the terms that are used is not to limit interpretation but to express the descriptive meaning as this emerges from the analysis during their first appearance in the text. This terminology concerns only the specific text and does not have a broader use. The specific terms are different from the rest of the text, the first letters of their words being capital letters.

### Entities

In the systems, methods and protocols consistent with the invention, internet transactions are managed and carried out and there are exactly 3 categories of entities to which it is necessary that the users participating in an internet transaction should belong. Participating in the internet transaction are:
FUs - The Final Users (at least one). They are the users who use the system in order to carry out internet transactions,
CVT - The Controller of Validity of Transactions (unique in the system) who verifies and decides about the successful or not outcome of a transaction, has a permanent static IP address for internet communication with the other entities and is responsible for the proper and smooth functioning of the system as a whole,
PTs - The Providers of Transactions (at least one). They are the users who use the system in order to provide specific internet transactions. The specification of the internet transactions the carrying out of which is allowed in the system (hereinafter called Transactions) arises from the agreements of each PT with the CVT.

A user is allowed to belong simultaneously to two different categories of entities.

### Communication Channels

Secure channel - In the systems consistent with the invention there is a secure channel between the PTs and the CVT which provides the capability for carrying out of the communication ensuring the confidentiality and the integrity of the data exchanged, having the two parties to the communication mutually authenticated, and with support of the feature of non repudiation on the part of the PT which is secured either wholly through the proprieties of the channel or in combination with the provisions which arise from the agreement between the CVT and the PT.

FU-CVT Communication channel - FU's information system retains an open communication channel on internet through which the information systems of FU and

CVT exchange data. The maintenance and the control of the specific channel is a responsibility of SPU/ESPUBridge (terms explanation in the following section).

Communication between FU and PT - Occurs above the web through the standard ways accessing the web for systems with the characteristics of FU's basic unit (terms explanation in the following section).

### Information Systems of Users

Each entity has an information system which is used in the processing of the necessary data which are used in the carrying out of the Transactions and also in the communication with the rest of the entities.

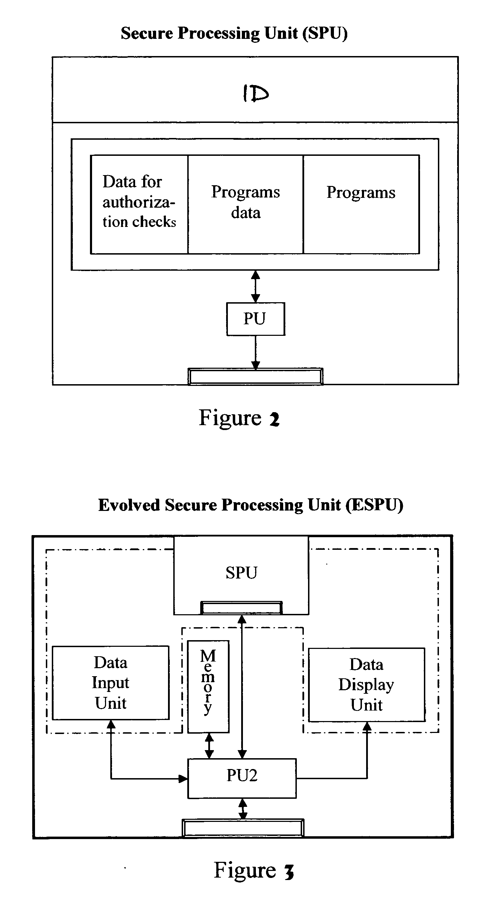

The information system of the FU (hereinafter ISoFU) includes:
i. A Secure Processing Unit (hereinafter called SPU). The structure of an SPU is represented through a simplified diagram in Fig2. An example of such a unit is provided by Ginter et al (patent diploma US5982891) and is revealed in picture 9 of the said patent. There is a storage place (memory) in which specific data are stored which verify the authorization for access to the rest of the memory in which the programs and the rest of the data are stored and there is also a processing unit (PU) which allow processing of the stored data, carrying out of the authorization checks and with the capability of execution of algorithms. There is also an interface responsible for accomplishing secure communication with external systems, allowing the input/output of both data and commands to the SPU. The processing of data and the execution of algorithms are carried out in a secure environment, and this is due to the architecture (Fig. 2), where with the combination of suitable secure authorizing procedures, it does not allow the unauthorized access and modification of the stored data and programs. Moreover, the SPU is surrounded by suitable tampering resistant material so that it may be insulated from the external environment, preventing the use of non permissible procedures to gain access to its interior. The SPUs which are used in the proposed systems have the necessary data and the necessary software securely stored which in combination with the Authorizing Data, allow the production of Confirmation Data (see 'Categories of Transaction Data') through the execution of the right algorithm. The ID which consists of a sequence of characters which is different for each SPU is also incorporated in them in a conspicuous place and in a form easily readable to the FU. The SPU may be connected to an Evolved Secure Processing Unit (hereinafter called ESPU). As shown also in Fig. 3 ESPU includes a processing unit (PU2) the connected SPU, a memory and data input/output units (e.g. a touchscreen or a screen and keyboard) to which there is access only through the processing unit (PU2). As shown also by the architecture, the data which are carried for processing to the SPU may come either from the internal data input unit or from some external source. Stored in the memory is suitable software for controlling the access to the SPU and to the input /display units. As regards the access to the SPU during the transfer of data to it, the specific software checks and duly notifies the SPU about the source of these data. For access to the display unit and display of some data the software requires the acceptance by the SPU of the access procedure regarding the specific data, thus transferring to the SPU the control of access to the data display unit.
ii. A basic unit with the proprieties of a simple personal computer and the capacity to connect with the internet and the SPU/ESPU
iii. At least one program of access to the internet and to internet services which supports graphical interface communication with the FU through whom the FU achieve interaction communication with the PTs.
iv. Output and display of data units (at least one) in a form easily readable for the FU, with one of them constituting the Main Display Unit.
v. Units (at least one) of data input into the information system by the FU, with one of them constituting the Main Input Unit.
vi. A mean of storing data in the form of Read Only Memory being incorporated in the basic unit or being mobile with the capacity of connecting/disconnecting to the basic unit. In the specific mean (hereinafter called the Storage Unit) there is an application code stored which is comprehensible to the basic unit and the SPU/ESPU and which includes the capacity of offering interactive graphic communication with the FU through the connected/incorporated data display units by opening of corresponding windows and also the achievement of interacting communication through internet. Moreover, the storage unit is characterized by the incorporated method for automatic start upon its connection to the basic unit of the applications stored in it (the Bridge program).

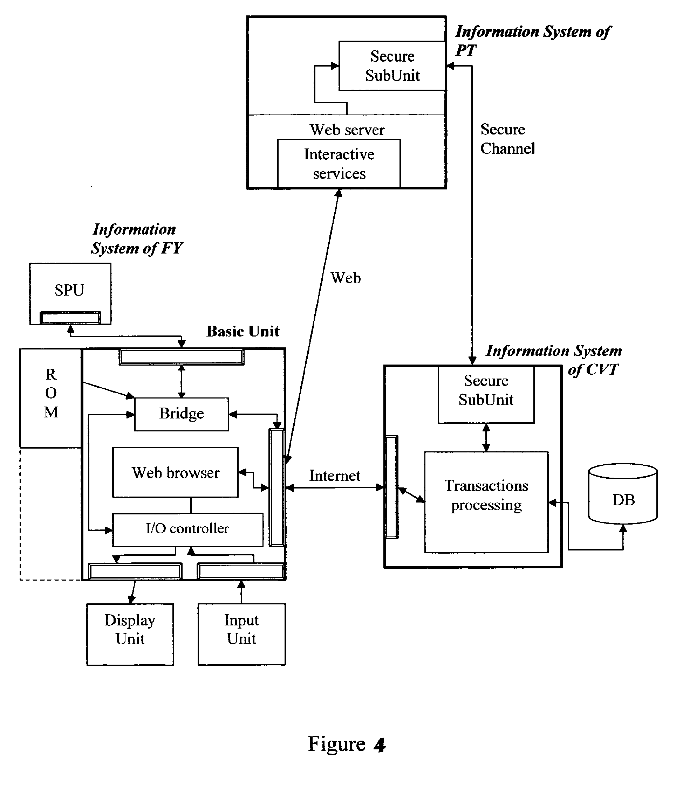

The information system of the PT (hereinafter ISoPT) has the capability of connection to the internet and includes a web server which allows communication with FUs for expressing an interest in carrying out Transactions through the web applications which it hosts. It also includes a Secure SubUnit which is responsible for the management and processing of the communication data exchanged between PT and CVT through the secure channel (Fig. 4).

The information system of the CVT (hereinafter ISoCVT) has a permanent connection to the internet with a static internet address (IP) and includes a corresponding Secure SubUnit for secure communication with the PT, the essential application of management of the Transactions and carrying out of all the necessary checks to ensure the smooth functioning of the system as a whole and a Data Base (DB) in which all the data which should be used for the application are stored.

### Categories of Data in the Transactions

In systems and methods consistent with the invention there are basic categories of data which are used in the carrying out of Transactions and have an essential role in their conclusion:
Transaction Data - They are necessarily used in all the Transactions. They have a type pre-determined by the CVT-PT agreements and their creation is essential for the procedure of carrying out the Transaction to start.
Confirmation data - They are necessarily used in all the Transactions. They are data different in every Transaction by which the FU accepts the carrying out of the Transaction while not revealing any information about the Authorizing Data (see immediately afterwards) and they are used in the audit procedure realized by the CVT.
Authorizing Data - They are necessarily used in all Transactions. They are data which are in the exclusive jurisdiction of the FU. Through their introduction into his information system, the FU directly authorizes the creation and proper shaping of the Confirmation Data and the activation of the necessary actions for the carrying out of the Transaction.
Valid Extra Data - Their use in some category of Transactions depends on the relevant CVT-PT agreement. They constitute common knowledge of the CVT and the FU who carries out the Transaction. They are data the confirmation of whose validity is required through some acceptable procedure by the CVT.
Personal Extra Data - Their use in some category of Transactions depends on a relevant CVT-PT agreement. They are data which need not be known to the CVT. For the successful carrying out of those Transactions, their disclosure by the FU to the CVT is required.
Temporary Extra Data - Their use in some category of Transactions depends on the relevant CVT-PT agreement. They are extra data which are essential for the successful carrying out of those Transactions and the confirmation of whose validity is not required.

As regards the Personal Extra Data and the Temporary Extra Data, they may be created either through the direct participation of the FU through their introduction into the information system using the data input unit (as part of the Authorizing Data) or through an automatic procedure following approval by the FU and their extraction from the storage place of the SPU/ESPU. If the automatic procedure is supported it is apparently necessary that there should be the ability of management on the part of the user of the specific stored data and it is also necessary that there should be an initialization phase during which the user will introduce the specific data in the storage place of the SPU/ESPU.

In the implementation example as this is described below, all the categories of data are used so that the differences between them may be better understood. The use of the Personal Extra Data in some Transaction indicatively could be due to the fact that they are sensitive data which it is not desirable to make known to the PT. The use in a Transaction of the Temporary Extra Data apart from the Transaction Data could indicatively be due to reasons of easy use facilitating the FU (in the case of the automatic procedure for their creation) or to that they constitute sensitive data which need to be protected during their transfer between the entities (as it is described below the methods of carrying out Transactions which are supported do not require the existence of a secure communication between the FU-PT in the procedure of creation and exchange of the Transaction Data).

The specification of the Transaction Data, the Valid Extra Data, the Temporary Extra Data and the Personal Extra Data which are used in each category of Transactions, is done directly with the addition of each category to the system. Each new category of Transactions emerges from the agreements between the CVT and each one of the PTs.

### Process of Carrying out a Transaction

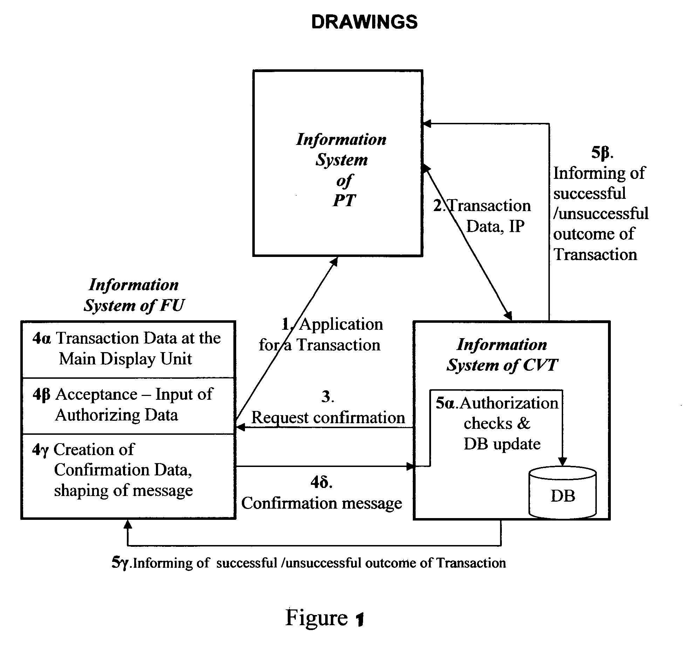

As also shown in Fig. 1, in the process for carrying out a Transaction, the FU using initially some program of access to the web (e.g. internet explorer) communicates with some PT and expresses his desire for the carrying out of the specific Transaction by shaping and sending to him the corresponding Transaction Data (e.g. through the completion of a web form). The PT's server for the carrying out of a Transaction carries these data internally to the Secure SubUnit where the necessary actions are taken for the secure transfer of these data together with the IP address of the FU to the Information System of CVT (ISoCVT) through a secure channel. The ISoCVT communicates with the Information System of the corresponding FU (ISoFU) in order to establish the desire of the FU for the carrying out of the specific Transaction. After this is done the Transaction Data are presented in an easily readable form to the FU at least through the Main Display Unit. The FU after checking them and provided he wishes to go ahead with the completion of the Transaction, introduces the Authorizing Data into his information system through the Main Input Unit authorizing it to produce the Confirmation Data and the Temporary and Personal Extra Data (if and as long as they are required in the specific Transaction) which after being properly shaped are sent to the ISoCVT. The checking of the Authorizing Data and the creation and shaping of the data which are sent to the ISoCVT are carried out by the SPU. The ISoCVT using the data which are stored in its DB carries out the necessary checks on the data which it receives from the ISoFU in order to establish their validity and the capability of successful completion of the Transaction. The FU and the PT are subsequently informed about the successful/unsuccessful outcome of the Transaction while simultaneous proper updating of the DB of the CVT occurs. At ISoFU a check is carried out by the SPU and after it is established that the sender of the information data about the outcome of the Transaction is indeed the ISoCVT, these data are shown in an easily readable form to the FU at least through the Main Display Unit.

In the PT-CVT communication, a secure channel is used with the attributes mentioned above. (see 'Communication Channels').

In the FU-CVT communication, a channel through internet is used with the attributes mentioned above. (see 'Communication Channels'). The methods/protocols consistent with the invention which may be used in the FU-CVT communication, secure the confidentiality and integrity of the exchanged data and also the certification of the identity of the two parties to the communication (mutual authentication) but also the non repudiation of the acceptance of the Transaction by the FU. There are several options in algorithms and protocols from the field of cryptography where through the right combination between them they can offer the necessary attributes to the FU-CVT communication as these are described above. In the communication methods/protocols which are consistent with the invention, apart from ensuring that the specific proprieties exist it is ensured that this is achieved without any further action or any additional specialized knowledge being required on the part of the FU.

The management of the display and input units may be carried out by the Bridge or the ESPU.

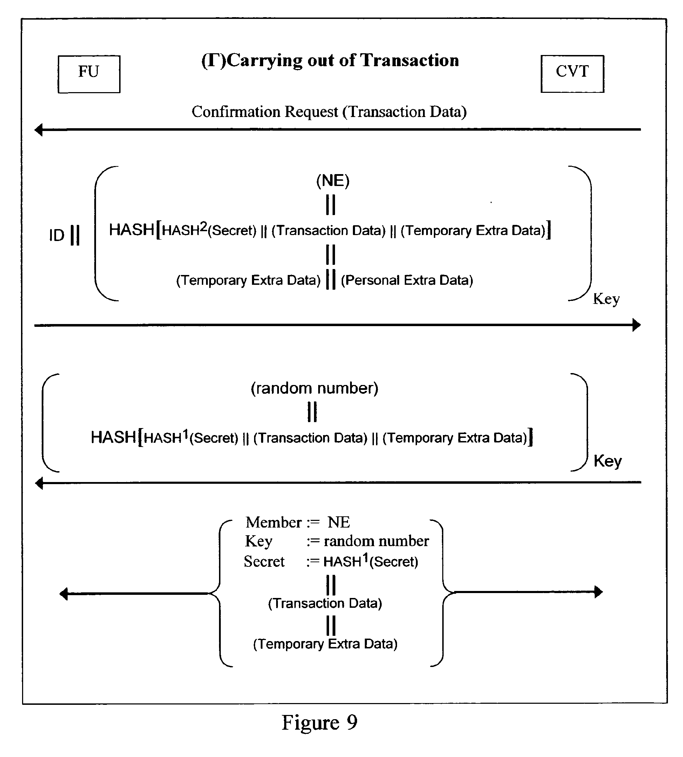

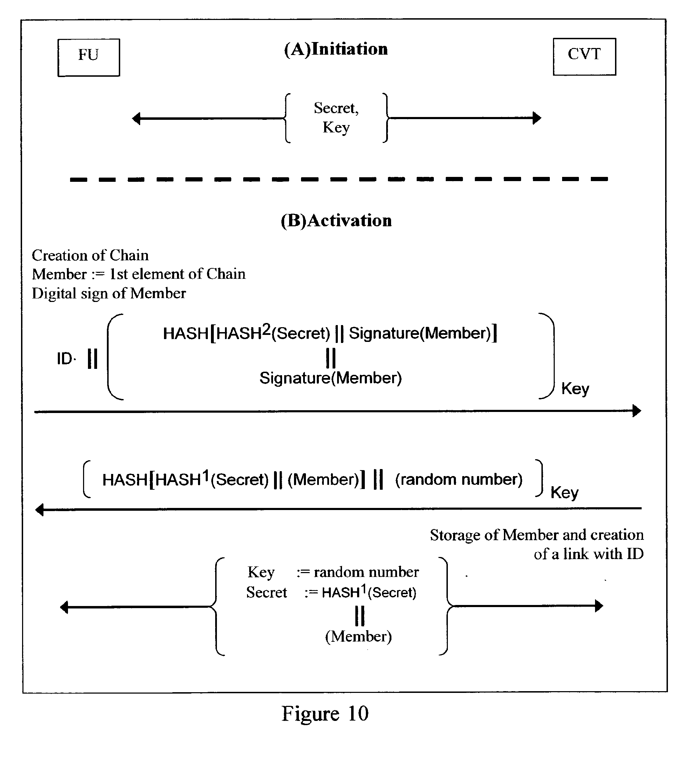

In Fig. 9, 10 is represented a proposed method of shaping the data of the communication between FU and CVT during the carrying out of a Transaction so that the necessary attributes as these are analyzed above may be maintained. For this to be achieved, use is made of 2 common secrets (hereinafter called the Secret and the Key) which are known only to the SPU and the ISoCVT. Also reverse hash chains are used. From the technical point of view a hash chain of M length is a list of M elements produced cryptographically where each element is the result of the execution of a hash function in the previous element, having as first element some randomly produced number (hereinafter called Root). The reverse hash chain consists of the elements described above in a reverse order. With the use of a secure hash function even if someone knows an element of the reverse hash chain cannot estimate any of the following in the order elements of the chain unless he knows the Root. The proposed method consists of 3 different phases:
A. Initiation - For an SPU to be used in the carrying out of Transactions on the basis of the specific method, before coming into the possession of some FU, the Secret and the Key must be shared between it and the ISoCVT. This procedure is carried out in such a manner as to ensure the confidentiality of the data and their protection against theft.
B. Activation - An FU after obtaining an SPU which has completed the initiation phase needs to authorize the carrying out of its activation process before the first Transaction with the use of the specific SPU is carried out. The activation procedure includes the following steps:
   i. The SPU using and storing a random number (Root) creates a reverse hash chain of a specific length M (hereinafter called the Chain) and stores and signs digitally its first element (hereinafter called Member). Subsequently with the use of the specific digital signature, of the Secret and with appropriate executions of a secure hash function (hereinafter called HASH), a message is created by the SPU which after being symmetrically encrypted with the use of the Key, is sent to the CVT together with SPU's ID. The message consists of the conjunction || of the digital signature with the
      HASH[HASH²(Secret) || (digital signature)]
   ii. The CVT using the Key decrypts the message and extracts the Member which he stores in the DB connecting it to the specific SPU. Subsequently generates a random number and sends to the ISoFU, symmetrically encrypted with the use of the key, the following message
      HASH [HASH¹(Secret) || Member] || (random number) and updates the DB storing the random number as the new Key and the [HASH¹(Secret) || Member] as the new Secret.
   iii. As soon as the message is received by the SPU, the stored Secret and Key are respectively updated and the FU is informed about the completion of the activation.

Γ. Carrying out of a Transaction - The steps as they are represented in Fig.9 are taken. The ISoCVT without knowing who the FU is, sends the Transaction Data waiting for the FU to confirms the desire for the carrying out of the specific Transaction, revealing his identity so that the successful completion of the Transaction may become feasible. The FU after checking the Transaction Data and if wishes to go ahead with the Transaction, authorizes the creation of the essential data which are sent encrypted together with the ID of the SPU to ISoCVT. In the data of the encrypted message which is sent to the CVT, there is the immediately next element (NE) in the Chain after the Member. For the value for the NE to be assessed, the knowledge of the Root is necessary. The Root is known only within the SPU. The checking of the correctness of the NE is easy with the use of the Member: Member = HASH (NE). Through this checking the CVT certifies that the FU has indeed given his authorization. The remaining part of the encoded message is a combination of all the data of the Transaction along with the Secret, which allow the ISoCVT to certify that the FU's approval concerns exactly the specific Transaction with the specific data (preservation of the integrity of the data). The encryption for protection against eavesdroppers is symmetrical and the Key which is common knowledge for the SPU and CVT is used as the encryption key. The ISoCVT using the Key which corresponds to the specific ID, decrypts the data and if they have the expected form, he certifies that the specific FU authorizes the carrying out of the specific Transaction. Subsequently, once it is checked whether the FU has the capability and the authorization to carry out the specific Transaction the ISoCVT sends the encrypted message by which he informs the ISoFU about the successful outcome of the Transaction. The message contains the new Key which will be used for the encrypting of the next Transaction and also a combination of all the data of the Transaction along with the Secret, which combination will constitute the new Secret. The SPU checks the specific combination and provided it has the expected form, the identity of the sender (CVT) is certified and the successful completion of the Transaction is confirmed. The FU is then informed and the storage place of the SPU and the DB of the CVT are updated with the new values for the Member, the Key and the Secret. The Secret changes each time and thus the combination of all the Transaction Data and the Secret which are sent encrypted to the CVT is never the same in two Transactions. Both messages are unknown to some eavesdropper and encrypted with a key unknown to the eavesdropper, which makes the extraction of any useful information from them impossible.

The M^{th} Transaction has a peculiarity. In this Transaction the NE is the Root which does not have a next element in the Chain. The Chain needs to be recreated so that the carrying out of the next Transactions may become feasible. The SPU goes ahead with the choice of a new Root and the creation of a new Chain. In the carrying out of the specific Transaction the first element of the New Chain is added to the Personal Extra Data and is handled accordingly. In this way the ISoCVT is updated regarding the new Chain and its first element. At the upgrading of the values both in the DB and in the SPU, the Member takes the value of the first element of the new Chain (instead of the value of the Root).

The data which are stored in the DB of the CVT are used for the carrying out of the necessary checks but cannot be used to produce data which could be used in a Transaction. Regarding the value of the NE it is necessary that the value of the Root should be known but this is securely stored exclusively in the SPU of the FU. In the method, with the exception of one use of a public key infrastructure in the activation phase -the digital signature- the very efficient reverse hash functions and algorithms of symmetrical encryption are exclusively used. As regards the performances, the minimum number of communication steps are taken (in contrast to the SSL / TLS protocols) with a minimum communication volume and compared to the use of the public key infrastructure with clearly reduced requirements in processing power.

In a variant of the method which is represented in Figs. 9&10, the ID is part of the Transaction Data in all Transactions. In this way the ISoCVT knows from the outset the identity of the FU who expresses a desire for the carrying out of some Transaction, therefore the request for confirmation is sent encrypted thus protecting the confidentiality of the Transaction Data while also allows from this step the verification of the identity of the CVT to the FU.

### Systems consistent with the invention

In Fig. 4 a system consistent with the invention in which the SPU is used is represented. The Information Systems of the 3 entities which participate in the carrying out of the Transaction are represented in simplified diagrams:

The ISoPT has a secure SubUnit in which the suitable operations for the sending and receipt of data by the ISoCVT through the secure channel are carried out. It also has a web server through which the possibility is offered to the FUs to express their interest in the carrying out of Transactions. The server carries the data internally to the Secure Subunit where the suitable actions are made for the secure sending of the data to the ISoCVT.

The ISoFU keeps open an internet communication channel for exchange of data with the ISoCVT and contains units (at least one) of output and display of data in a form easily readable by the FU with one of them constituting the Main Display Unit of the ISoFU and units (at least one) of input of data into the information system by the FU with one of them constituting the Main Input Unit to the ISoFU. It also has a basic unit to which the above mentioned units are connected and in which there is a program of access to the internet (e.g. internet explorer) by which the FU communicates with the ISoPT in order to express his interest in the carrying out of Transactions. (e.g. through the filling of a web form). It also has the SPU in which algorithms and data necessary to the successful completion of the Transactions are securely stored. It also has a ROM (memory storage medium). In the system, this may be realized either through its incorporation in the basic unit or through a portable medium with possibility of connection to/disconnection from the Information System (e.g. in the form of an optical data disc -CD ROM). Stored in the said storage medium is the Bridge Program which in case the said medium is incorporated in the basic unit is in continuous execution and in case the medium is portable its execution within the basic unit starts automatically with the connection of the medium. The said program is responsible for the management of the channel of communication between the information systems of the FU and the CVT in the procedure of carrying out the Transactions. It also manages the input and output (display) units and acts as the intermediate in the communication between the SPU and the ISoCVT. For the communications of the basic unit with the internet, the SPU, the input unit and the display unit, the corresponding interfaces are used.

The ISoCVT has a data base (DB) in which all the data necessary for checking the validity of the Transactions are stored and also a suitable program responsible for the management of the Transactions and the carrying out of all the necessary checks to ensure the smooth functioning of the system as a whole. It also has a Secure SubUnit with functions corresponding to those of the Secure SubUnit of the ISoPT. For the communication with the ISoFU the corresponding interface is used.

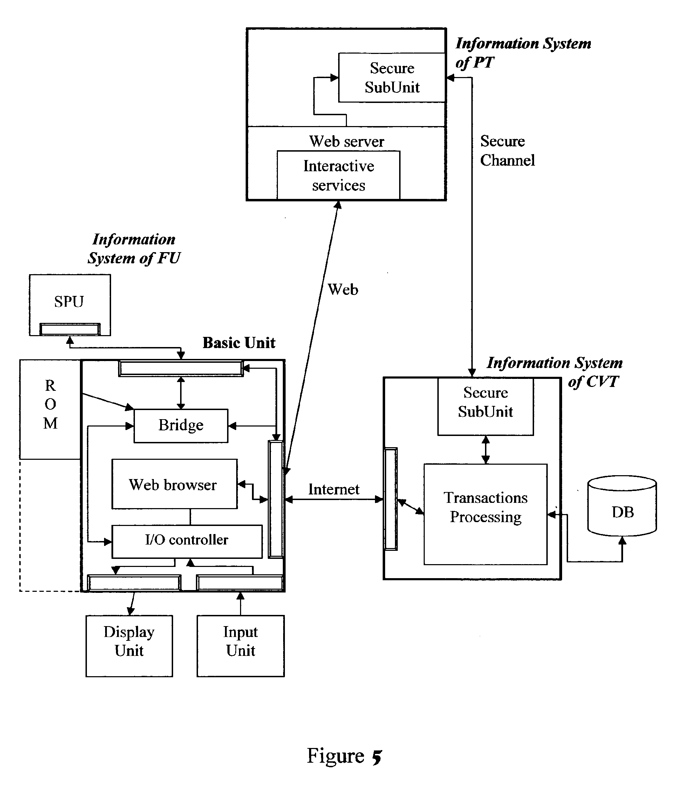

In fig. 5 a system consistent with the invention is used which constitutes a variant of the system which is represented in Fig.4. Here the internet channel of the information systems of the FU and the CVT is managed by the SPU and there is also a second internet communication channel with the ISoCVT which is used only for one-way transferring data from ISoCVT to ISoFU and which is managed by the Bridge.

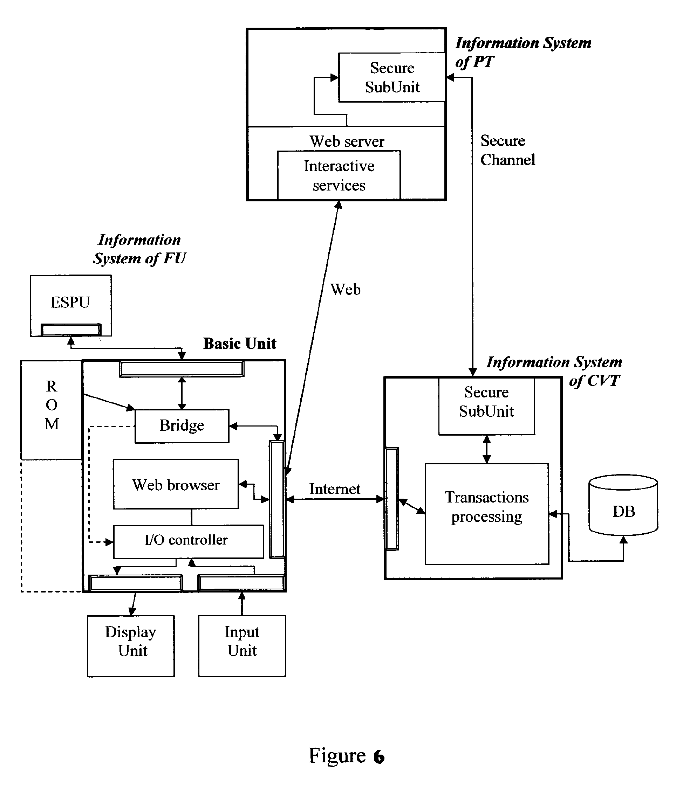

In fig. 6 one more variant of the system of Fig. 4 is represented. In the ISoFU an ESPU is used to which the SPU is connected and moreover the display unit and the data input unit of the specific ESPU constitute respectively, the Main Display Unit and the Main Input Unit of the ISoFU. There is the capability through the Bridge for optionally display of data in the display units which are connected to the basic unit.

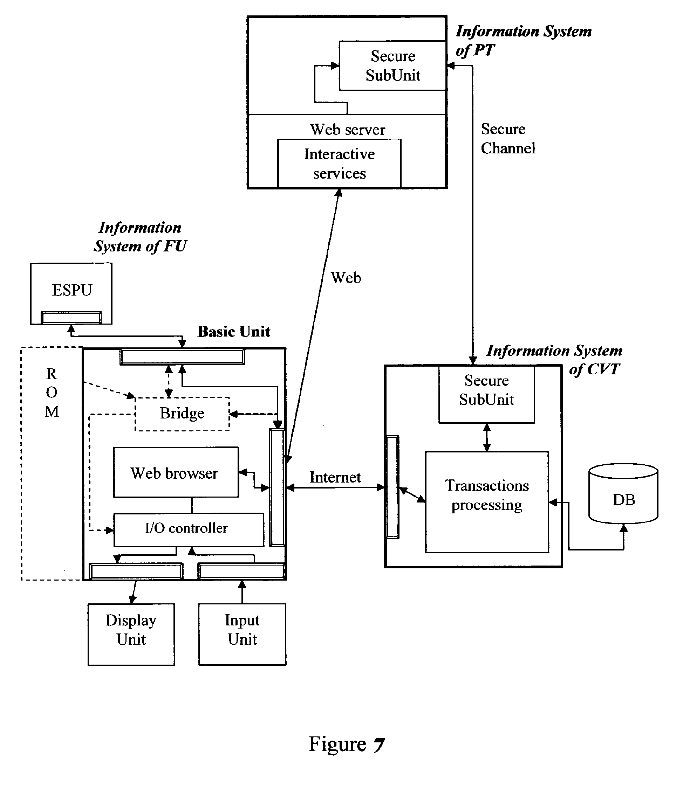

In fig. 7 a variant of the system of Fig.6 is represented. Here the internet communication channel of the information systems of the FU and the CVT is managed by the SPU or the ESPU and optionally there is also a second internet channel of communication with the ISoCVT which is used only for the forwarding data by the ISoCVT and which is managed by the Bridge. Through this realization the existence of the storage medium with ROM memory and the execution of the Bridge program are optional and they are needed only if the existence of the second optional channel of communication with the ISoCVT is envisaged so that there may be a display of data which are forwarded by the ISoCVT to the data display units which are connected to the basic unit.

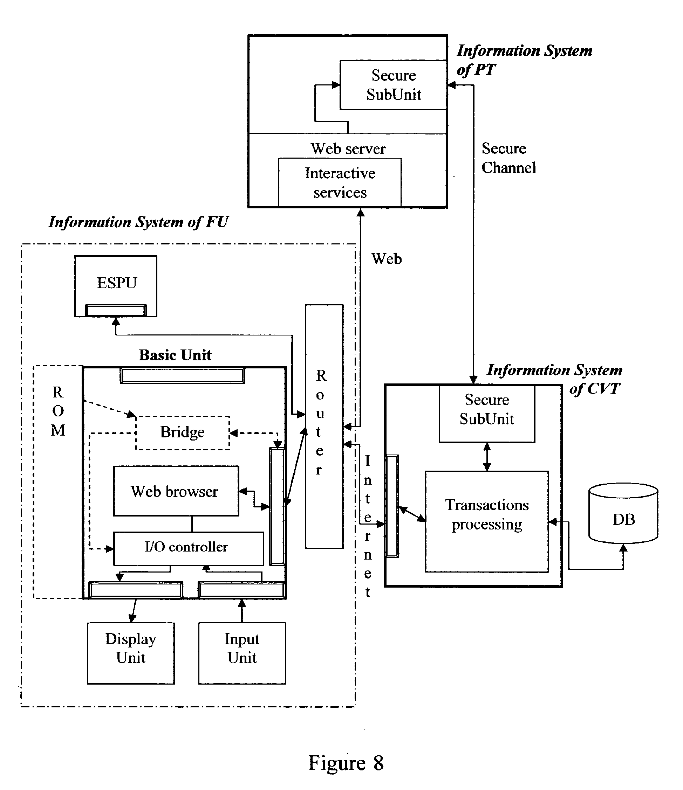

In Fig.8 a variant of the system in Fig 7 is represented. Here there is a rooter through which the ESPU and the basic unit gain access to the internet independently the one from the other.

The invention can be applied in the first place in all the cases of management and carrying out of transactions of an economic and commercial nature but also it may be used in a specialized manner, in specific internet transactions in a large number of sectors, the sectors of services, tourism and medicine are indicatively mentioned.

### EXAMPLE OF APPLICATION

There is a large number of possible amendments and different sectors of application as it has been pointed out in the previous section, therefore the invention and the protection wanted, as it is described in the claims, is not limited to the specific version as it is described in this section. The target of this sectiom is to present the use of the invention in a comprehensible manner to persons without specialized knowledge through an implementation example. The next example is suitable for this purpose and concerns a system of carrying out electronic commerce.

### Entities

Within the framework of the example there is, as required, an entity which is the CVT. The CVT moreover offers some categories of Transactions to the FUs and consequently has the attributes of a PT (it belongs also to the category of PTs). There are another 3 entities which belong to the category of PT: Electronic Shop 1, Electronic Shop 2 and Electronic Shop 3. The acquisition of the attribute of PT presupposes a previous agreement between them and the CVT. There is an entity which belongs to the category of FU, Consumer 1. To acquire the attribute of FU someone should first acquire an SPU/ESPU with specifications which are mentioned above and specify a sequence of characters (hereinafter called Password) which will constitute the Authorizing Data. He should also acquire a CD-ROM disc in which the Bridge program is stored and which starts its operation automatically upon the insertion of the disc into the respective cd-rom reader device of a basic unit with the basic specifications as they are mentioned above.

### Transactions

The 6 categories of Transactions of the example arise from the agreements between the CVT and each one of the PTs. As regards the definition of the Transaction Data, the Valid Extra Data, the Temporary Extra Data and the Personal Extra Data it is possible to have various variants with the desirable effect and the selection of one of them depends on the agreement between the CVT and the PT.

### Title of 1^{st} Category: Sale of Goods 1

It is supported by: Electronic Shop 1
Description: The FU upon the completion of the Transaction carries out a purchase on the internet from the PT (in the specified system Electronic Shop 1)
Data
Transaction Data:
   i. Text of description of products for sale
   ii. For all the products for sale, pairs {Serial Number of Product + price of product}
   iii. Total amount of payment
   iv. Delivery address
   v. Name and Surname of Recipient
   vi. Contact telephone
Valid Extra Data: They are not used
Temporary Extra Data: They are not used
Personal Extra Data: They are not used

### Title of 2^{nd} Category: Sale of Goods 2

It is supported by: Electronic Shop 2 and Electronic Shop 3
Description: The FU upon the completion of the Transaction carries out a purchase on the internet from the PT (Electronic Shop 2/Electronic Shop 3)
Data
Transaction Data:
   i. Text of description of products for sale
   ii. For all products for sale, pairs {Serial number of product + price of product}
   iii. Total Amount of payment
Valid Extra Data:
   i. Contact telephone
Temporary Extra Data:
   i. Delivery address
   ii. Name and surname of recipient
Personal Extra Data: They are not used

### Title of 3^{rd} Category: Sale of Goods to regular customers 1

It is supported by: Electronic Shop 2
Description: The PTs who support this category of Transactions (in the specific system Electronic Shop 2) offer special discount prices of the products for the FUs who are regular customers of theirs. Regular customers are those who carry out at least 3 purchases through the system from the specific PT within the previous year.
Data
Transaction Data:
   i. Text of description of products for sale
   ii. For all the products for sale, pairs {Serial Number of Product + price of product}
   iii. Total amount of payment without the discount
   iv. Total amount of payment
Valid Extra Data:
   i. Contact telephone
   ii. Confirmation of existence of at least 3 successful Transactions of the specific FU with the specific PT within the previous year
Temporary Extra Data:
   i. Delivery address
   ii. Name and surname of recipient
Personal Extra Data: They are not used

### Title of 4^{th} Category: Increase of Balance 1

It is supported by: CVT
Description: The FU upon the completion of this Transaction increases the money balance of the electronic account he maintains in the system. The methods which are supported by the specific system for this purpose are the use of a credit card or electronic money.
Data
Transaction Data:
   i. Number- Amount of increase
Valid Extra Data: They are not used
Temporary Extra Data:
   i. Method of increase (possible options those referred to above)
Personal Extra Data:
   i. The necessary data depending on the method chosen (credit card expiry data etc/data of the electronic money)

### Title of 5^{th} Category: Increase of Balance 2

It is supported by: CVT
Description: The FU upon the completion of the Transaction increases the money balance of the electronic account he maintains in the system. This is done through the use of a credit card the necessary particulars of which (no. expiry date, etc) are already known to the CVT
Data
Transaction Data:
   i. Number- Amount of increase
Valid Extra Data:
   i. Particulars of credit card (no., expiry date etc)
Temporary Extra Data:
   i. Choice of credit card that will be used. This may be the default credit card or the characteristic name/number of the credit card (see next Transaction) that will be used
Personal Extra Data: They are not used

### Title of 6^{th} Category: Registration of credit card

|It is supported by: CVT
Subscription: The FU upon the completion of this Transaction informs the CVT giving him the necessary particulars of a credit card which he has in his possession so that it may be used in future in a possible carrying out of the Transaction 'Increase of Balance 2' by him.
Data
Transaction Data;
   i. Characteristic name/number-by this, the specific credit card for use in the Transaction 'Increase of the Balance' will be identified.
Valid Extra Data: They are not used
Temporary Extra Data:
   i. Choice if this card will be the default card
Personal Extra Data:
   i. The necessary particulars for use of the credit card (no. expiry date etc)

### Description of carrying out of Transactions which are supported by the system of the example

Before Consumer 1 moves on to carry out some Transaction, he introduces the CD disc he has in his possession into the corresponding device of the basic unit of his information system.

### Sale of Goods 1

Using some program of access to the Internet which is in the information system, Consumer 1 communicates through web with some of the electronic shops which support this Transaction -Electronic Shop 1- and expresses the desire to carry it out choosing the products he wishes to buy and giving his address, his name and surname and his telephone. The web server of the specific PT by activate the appropriate procedures, sends to the Secure Subunit the IP address from which Consumer 1 communicated with him, and also the text which describes his order, regarding all the products of the order, the serial number together with the price of the respective product and finally the total amount which Consumer 1 will pay. These are then transferred securely to the CVT. CVT checks whether the ongoing Transaction is supported by the system and by the specific PT (Electronic Shop 1). Provided this is so he checks whether the data which he has received have the corresponding form with the expected Transaction Data for the Specific Transaction. If this checking too is successful he sends through the internet to Consumer 1 a request for confirmation of his intention to carry out the specific order from the specific electronic shop together with the specific prices and the total amount. As soon as these data are received by the information system of Consumer 1, they are displayed to him through some Display Unit in an easily readable form. After checking the data of the order using some input unit, he gives the approval for the Transaction to move forward introducing his Password. The SPU/ESPU checks the correctness of the Password and moves on to the proper shaping of the Confirmation Data so that the required attributes as they are described earlier may be fulfilled and they are subsequently sent to the CVT. The CVT checks their authenticity and integrity, this is followed by checking to see whether the required amount exists in the electronic account of Consumer 1 which is deducted. The suitable additional updating of the DB is subsequently made and the appropriate messages are sent to Electronic Shop 1 and to Consumer 1 about the successful conclusion of the order.

### Sale of Goods 2

Transactions of this Category are supported by Electronic Shops 2 and 3. They are similar to the Transaction "Sale of Goods 1". Here when a desire for the carrying out of a purchase from Consumer 1 is expressed, in contrast to the previous category, no particulars of the address, the telephone and identity of the receiver are given. The address and the name and surname of the receiver constitute Temporary Data and as such they are created by Consumer 1 in the phase of shaping of the Confirmation Data. There are two ways to create them either through their introduction by the Consumer 1 through a data input unit or through their extraction from the memory of SPU/ESPU (on condition of course that these were previously stored in the specific memory through some established procedure).

On the basis of the agreement of the respective electronic shops and the CVT, the contact telephone constitutes a Valid Extra Data. For this to become feasible, upon the achievement of the first such agreement (therefore the addition of this category to the system) the appropriate shaping of the DB is required to be done so that the information about FU's contact telephone could be stored together with the other particulars for the FU. There is also need for some procedure of confirmation of the validity of the specific information (contact telephone). Thus after the Confirmation Data, the name, the surname and the address of the receiver are given to the CVT, and the checks, as they are described in the previous category, are successfully completed, it is checked whether for Consumer 1 there is a contact telephone stored in the DB. If not the Transaction is cancelled by sending a message to this effect to Consumer 1 and to the corresponding electronic shop. If it exists, it is extracted from the DB and together with the Temporary Data (name, surname and address of the receiver) it is sent through the secure channel to the electronic shop together with the message about the successful conclusion of the order. Finally, the DB is suitably updated and Consumer 1 is informed about the successful outcome of the Transaction.

### Sale of Goods to regular customers 1

These Transactions concern the carrying out of purchases from electronic shops which support it, with reduced debiting on condition that the FU has carried out at least 3 successful Transactions of any category from the specific electronic shop during the previous year which on the basis of the corresponding agreement automatically places him among the regular customers of the specific electronic shop. The basic difference in the carrying out in relation to the 'Sale of Goods 2" category is that in the Valid Extra Data the confirmation of the safeguarding of the FU as regular customer in the specific electronic shop is added. This presupposes, upon the achievement of the first such agreement (therefore the addition of this category to the system) the shaping of the DB so that the background of the last year regarding the successful Transactions of the FUs with the electronic shops supporting this category of Transactions may be maintained in the appropriate manner. In the checking procedure the CVT moreover checks whether the criterion of regular customer as described above is fulfilled. If not the Transaction is cancelled by sending the appropriate message to Consumer I and to the corresponding electronic shop. If it is fulfilled and the other checks are successful, the Temporary Data (name, surname and address of the recipient), the contact telephone and the assurance that Consumer 1 is a regular customer are sent to the electronic shop of the Transaction together with the message about the successful completion of the order. Finally, the DB is appropriately updated and Consumer 1 is informed about the successful outcome of the Transaction.

### Increase of Balance 1

These Transactions are carried out between the FUs and the CVT and their successful outcome increases the balance of the electronic account of the FUs by the corresponding amount. The methods which are supported by the system for this purpose, is through the use of a credit card or electronic money. Using some program of accessing the internet, Consumer 1 communicates with the CVT and expresses the desire for the carrying out of this Transaction giving the amount by which he wants to increase the balance of the electronic account. The CVT, provided the data he has received have the form corresponding to the expected Transaction Data for the specific Transaction, sends through the internet to Consumer 1 a request for confirmation of his intention for increase of the balance of his electronic account by the corresponding amount. As soon as the application request is received by the information system of Consumer 1, the Transaction Data are displayed to him through some Display Unit in an easily readable form. If he wishes its completion he needs to specify the method he will use (credit card / electronic money) in order to give the necessary data for the use of the specific method. There are two ways to do this, either through the introduction by the Consumer through a data input unit or the extraction from the memory of SPU/ESPU (on condition of course that these were stored previously, through some relevant procedure, in the specific memory). For the creation and proper shaping of the Confirmation Data and of the other data, Consumer 1 as in all Transactions, using some input unit needs to give his approval by introducing his Password. Then the data properly shaped are sent to the CVT. The CVT checks their authenticity and integrity. He then uses the proper procedure for the collection of the required amount. Provided the checks and the procedures are successful the DB is duly updated and the suitable message is sent to Consumer 1 about the successful outcome of the Transaction.

### Insertion of credit card 1

Through Transactions of this Category the FUs inform the CVT by giving particulars of credit cards. With these particulars the future debiting of the credit cards will be possible if and when the FUs themselves choose such action. As it is possible that there may be insertions of more than one credit card, the CVT demands that regarding each credit card a characteristic name or number should be specified. In the cases where in the system the FU will be asked to refer to one of these credit cards (e.g. in Transactions 'Increase of Balance 2') this will be done with the use of the corresponding characteristic name /number. It also provides that one of the inserted credit cards of each FU should have the attribute of the default so that where it becomes necessary to make a reference to it this can be done also with the use of the special key phrase 'DEFAULT CARD'.

Consumer 1 through the internet communication with the CVT expresses his desire for insertion of a credit card giving a characteristic name/ number for this card. The CVT, provided the data he has received have the form corresponding to the expected Transaction Data for the specific Transaction, sends through the internet to Consumer 1 a request for confirmation of his intention for insertion of a credit card with the corresponding characteristic name/number. As soon as the request is received by the information system of Consumer 1, the corresponding message with the specific characteristic name/number is displayed to him. If he desires the completion of the insertion, using some data input unit he should specify whether the specific credit card will be a 'DEFAULT CARD' or not. He also needs to give particulars of the credit card (no., expiry date etc) which are essential for the debiting of credit cards. There are two ways to do this, either through their introduction by Consumer 1 through a data input unit, or the extraction from the memory of the SPU/ESPU (on condition of course that these were stored earlier in the specific memory through some established procedure) For the creation and proper shaping of the Confirmation Data and the other data Consumer 1, as in all the Transactions, using some input unit needs to give his approval by introducing his Password. Subsequently, the data, properly shaped, are sent to the CVT. The CVT checks their authenticity and integrity. It is then checked whether there is another insertion of a credit card for Consumer 1 which has the same characteristic name/number. Also if it has been chosen that the credit card should not be a 'DEFAULT CARD' it is checked whether other successful insertions of credit cards have been made by Consumer 1. If the credit card has a unique characteristic name/number and there is an inserted credit card which is 'DEFAULT CARD' the DB is duly updated and the right message about the successful outcome of the Transaction is sent to Consumer 1.

### Increase of Balance 2

These transactions are carried out between the FUs and the CVT and their successful outcome increases the balance of the electronic account of the respective FU through the debiting of some credit card which has been inserted by him (following the successful carrying out of at least one Transaction 'Insertion of credit card 1') Consumer 1 communicates through the internet with the CVT and expresses the desire for the carrying out of this Transaction giving the amount by which he wants to increase the balance of his electronic account. The CVT provided the data he has received have a form corresponding to the expected Transaction Data for the specific Transaction, forwards through the internet to Consumer 1 a request of confirmation of his intention for increase of the balance of his electronic account by the corresponding amount. As soon as the request is received by the information system of Consumer 1 it is displayed to him through some Display Unit in an easily readable form. If he desires its completion he needs to give through a data input unit the characteristic name/number of the credit card which will be debited with the corresponding amount or the special phrase 'DEFAULT CARD'. For the creation and proper shaping of the Confirmation Data and the other data Consumer 1, as in all Transactions, by using some input unit, needs to give his approval by introducing his Password. The data, properly shaped, are then sent to the CVT. The CVT checks their authenticity and integrity. He subsequently goes ahead and extracts from the DB the particulars of the credit card with the specific characteristic name/number and sets in motion the proper procedure for its debiting with the required amount. If the checks, the extraction from the DB and the procedure are successful the DB is duly updated and the right message about successful outcome of the Transaction is sent to Consumer 1.

In the Transactions FU - CVT because there is the peculiarity of the dual identity of the CVT (he acts as the CVT but also as a PT) for reasons of performance a variant of the method of carrying out the Transaction is supported where the Transaction Data are sent together with the Temporary Extra Data and the Personal Extra Data (in one step both the expression of desire and the confirmation of acceptance) and the steps of CVT-PT communication are omitted since it is the same entity. If in the system the use of ESPU with an incorporated screen and keyboard is supported the Display Units and the data input units which are mentioned in the example are the screen and the keyboard of the ESPU, respectively. In the opposite case, it is the screen and the keyboard of the basic unit.

In the FU-CVT communication over the internet all the necessary measures are taken and all the suitable actions are taken for the safeguarding of the confidentiality of those data, the disclosure of which may lead to a security rift in the system. Also the suitable actions are taken to safeguard the integrity of the data and the confirmation of the authenticity of the entities. Moreover, the Confirmation Data have such a form that only the FU is in a position to create them, and the CVT is in a position by processing them to check the validity and the right to carry out the Transaction.

It should be pointed out that the example as it is described aims at facilitating the understanding of the invention and in no way constitutes a complete proposal for the creation of a system of carrying out electronic commerce nor does it cover the entire spectrum of the required protection as it is presented through the claims.

## Claims

1. A system for carrying out internet transactions which is **characterized by** the fact that:
there are exactly 3 categories of entities to which the users participating in the internet transaction are allowed to belong:
FU - The Final Users (at least one). They are the users who use the system in order to carry out internet transactions,
CVT - The Controller of Validity of Transactions (unique in a system) which checks and decides about the successful or not outcome of a transaction, has a static IP address for internet communication with the other entities and is responsible for the proper and smooth functioning of the system as a whole,
PT - The Providers of Transactions (at least one). They are the users who use the system in order to provide specified internet transactions,
one user is allowed to belong simultaneously to two different categories of entities,
the definition of internet transactions the carrying out of which is allowed in the system (Transactions) emerges from the agreements of each PT with the CVT,
there are 6 categories of data which are used in the Transactions and play a substantial role in their carrying out:
Transaction Data - They are necessarily used in all Transactions. They have a specific structure and their production is a requisite for the initiation of a Transaction,
Confirmation Data - They are necessarily used in all Transactions. They are the data by which the FU accepts the realization of the Transactions and they are used by the CVT in the audit procedure. They are never the same for 2 Transactions not even in identical Transactions between the same entities (FU and PT) and the knowledge of which does not allow one to extract information about the Authorizing Data (see immediately afterwards),
Authorizing Data - They are necessarily used in all the Transactions. They include information which is exclusively under the jurisdiction of the FU. By their introduction through a data input unit into his information system, the FU directly authorizes the creation and proper shaping of the Confirmation Data and the carrying out of all the necessary actions for the carrying out of the Transaction,
Valid Extra Data - Their use in some category of Transactions depends on the special characteristics of each category. They are common knowledge of the CVT and the FU which carries out the Transaction. They are data regarding which the confirmation of their validity by the CVT is necessary through some acceptable procedure,
Personal Extra Data - Their use in some category of Transactions depends on the special characteristics of each category. They are data which should not necessarily be known to the CVT. For the successful carrying out of the Transaction their disclosure by the FU to the Information System of CVT (ISoCVT) is required,
Temporary Extra Data - Their use in some category of transactions depends on the special characteristics of each category. They are extra data which should necessarily be revealed by the FU to the ISoCVT for the successful carrying out of the Transaction and regarding which, no confirmation of their validity is required,
comprises a secure channel for communication between the PT and CVT entities which provides the capability of establishing communication, ensuring the confidentiality and integrity of the exchanged data with the two parties to the communication being mutually authenticated and with the support of the attribute of non repudiation on behalf of the PT, each entity has an information system which is used for the processing of the necessary data which are used in the carrying out of the Transactions as well as for the communication with the other entities,
the Information System of the FU (ISoFU) retains open an internet communication channel for exchange of data with the ISoCVT and comprises:
a Secure Processing Unit (SPU) with the capability of storage and processing of data and execution of algorithms within a secure environment isolated from the external environment through proper forgery resistant material, with secure procedures authorizing access to the stored data and programs, with the capability of secure communication with external systems; and in which SPU the proper programs and the proper data are stored which in combination with the Authorizing Data allow the execution of the algorithm for the production of the Confirmation Data; and to which unit there is also attached in a conspicuous place and in a form that can be easily read by the FU a sequence of characters (ID) which is unique and different for each SPU,
a basic unit with the attributes of an ordinary personal computer and the capability of connection to the internet and to the SPU,
at least one program of access to the web and to web services which supports graphical interface communication with the FU through which the FU achieves interactive communication with the PT,
units (at least one) on output and display of data to the FU in an easily readable form, with one of them constituting the Main Display Unit in the ISoFU,
units (at least one) on input of data into his information system by the FU with one of them constituting the Main Input Unit in the ISoFU,
a medium of static storage of data in memory (Read Only Memory) with the capability of connection to the basic unit. In the specific medium (Storage Unit) there is stored an applications code which is understandable by the basic unit and by the SPU and which includes the capability of providing an interactive graphic interface environment with the FU through the connected/incorporated display units by opening of corresponding windows, as well as for establishing interactive communications through the web, moreover the Storage Unit is **characterized by** the incorporated method for automatic execution upon its connection to the basic unit of the applications stored in it (the Bridge program),
the information system of the PT (ISoPT) has the capability of connection to the internet and comprises a web server and the web applications which are installed on it and a Secure SubUnit which is responsible for the management and processing of the data of communication of PT and CVT through the secure channel,
the information system of the CVT has a permanent connection to the internet through a static IP address and comprises a corresponding Secure SubUnit for secure communication with the PT, the necessary application for management of the Transactions and carrying out of all the necessary checks to ensure the smooth functioning of the system as a whole and a Database (DB) in which all the data which are necessary to be used in the specific application are stored.

2. A secure processing data unit (ESPU) in which there is the capability of connection to the SPU from the system of claim 1 and which ESPU comprises:
a data display unit,
an input data unit,
an interface for communication with external systems,
a memory in which data and applications algorithms are stored,
a processing unit (PU2) with the capability of execution of the applications which are stored in the memory and which has exclusive access to the connection with the SPU interface, to the data display unit, to the connection with external units interface and to the memory; is **characterized by** the existence in the memory of stored software which controls the operation of the specific ESPU and ensures that:
for gaining access to and use of the incorporated display unit, the consent of the connected SPU is required, and
the verification of both the incorporated input unit and the incorporated interface communication is carried out every time data are sent by them to the connected SPU with simultaneous proper informing of the SPU.

3. A secure processing data unit in consistent with claim 2 wherein the connected SPU gives consent for acquiring access to the incorporated display unit and display of some data only if it is established that the sender of these data is the ISoCVT from the system of claim 1; or the specific data constitute the Transaction Data from the system of claim 1 and at the same time it is not established that their sender is not the ISoCVT.

4. A system according to claim 1 wherein the ISoFU furthermore comprises the ESPU from claims 2,3 to which the SPU is connected and wherein the display unit and the input unit of the specific ESPU constitute respectively, the Main Display Unit and the Main Input Unit for the ISoFU.

5. A system according to claim 4 wherein the ISoFU furthermore comprises a rooter through which the ESPU and the basic unit acquire access to the internet separately.

6. A system according to claims 1,4 where in the ISoFU, the Bridge manages the internet communication channel for exchange of data with the ISoCVT and acts as intermediate in the exchange of data.

7. A system according to the claims 4,5 where in the ISoFU, the ESPU manages the internet communication channel for exchange of data with the ISoCVT and acts as intermediate in the exchange of the data.

8. A system according to the claims 1,4,5 where in the ISoFU, the SPU manages the internet communication channel for exchange of data with the CVT.

9. A system according to the claims 7 or 8 wherein the ISoFU there is a second internet communication channel with the ISoCVT which is used only for receiving data from the ISoCVT and which is managed by the Bridge and through which the ISoCVT sends exactly the same data which it sends also through the first channel.

10. A method of carrying out internet transactions in which the FU, the PT and the CVT participate and in which the Transaction Data, the Confirmation Data, the Authorizing Data, the Valid Extra Data, the Personal Extra Data and the Temporary Extra Data from the system of claim 1 are used. The method comprises the following steps:
i. The FU using the program of access to the web communicates with the information system of some PT and expresses the desire for the carrying out of a Transaction, by shaping and sending it the corresponding Transaction Data
ii. A check is carried out and if the Storage Unit from the system of Claim 1 is not connected to the basic unit it is so connected as to ensure that the applications code which is stored in it is running within the basic unit (the Bridge program)
iii. The ISoPT through the Secure Sub-Unit establishes secure communication with the ISoCVT and sends it the Transaction Data together with information about the internet address of the FU
iv. Through the internet communication channel for exchange of data between the information systems of the FU-CVT from the system of claim 6, the ISoCVT communicates with the Bridge sending it a request for confirmation of the desire of the FU for the carrying out of the specific Transaction with the specific Transaction Data
v. As soon as the request for confirmation of the Transaction is received, the Bridge sends to the SPU from the system of claim 6 the data which it received from the ISoCVT and forwards the display of the Transaction Data in an easily readable form at least through the Main Display Unit
vi. If the FU desires to proceed with the completion of the Transaction, through the Main Input Unit he introduces into his information system the necessary data (Authorizing Data) which are carried to the SPU authorizing the creation of the Confirmation Data, the Personal Extra Data and the Temporary Extra Data
vii. The SPU uses the Authorizing Data in order to make the necessary authorizing checks and the rest of the data which it received from the Bridge in order to check whether the sender is indeed the ISoCVT. If the authorizing checks are successful and it is not established that the sender was not the ISoCVT, the SPU using data which constitute common knowledge of the SPU and the CVT and data which are exclusively stored in its secure storage space and the data it has received in the previous steps, creates the data which are required for the carrying out of the specific Transaction which it sends back to the Bridge
viii. The Bridge sends the specific data to the ISoCVT. The specific data, in the previous step are properly shaped by the SPU, so as to ensure their confidentiality and integrity at the time they are sent at this step through the internet communication channel
ix. The ISoCVT on the basis of the information it has in the DB and the data it receives from the Bridge proceeds and makes the necessary checks and decides about the outcome of the Transaction (successful/unsuccessful completion) and updates the DB accordingly
x. The ISoCVT notifies through the secure channel the ISoPT about the outcome of the Transaction and sends the Temporary Extra Data and the Valid Extra Data or the confirmation of their validity
xi. The ISoCVT notifies the Bridge about the outcome of the Transaction
xii. The Bridge sends to the SPU the data which it receives from the ISoCVT
xiii. The SPU if it establishes that the sender of the specific data is indeed the ISoCVT returns them to the Bridge properly modified so that they may be easily readable to the FU
xiv. The Bridge forwards the display of the specific data to the FU in an easily readable form at least through the Main Display Unit

11. A method of carrying out internet transactions in which the FU, the PT and the CVT participate and in which the Transaction Data, the Confirmation Data, the Authorizing Data, the Valid Extract Data, the Personal Extra Data and the Temporary Extra Data from the system of claim 1 are used. The method comprises the following steps:
i. The FU using the program of access to the web communicates with the information system of some PT and expresses the desire to carry out a Transaction, by shaping and sending it the corresponding Transaction Data
ii. The ISoPT, through the Secure SubUnit establishes secure communication with the ISoCVT and sends it the Transaction Data together with information about the internet address of the FU
iii. At least through the two way internet communication channel for exchange of data between the FU and the CVT from the system of claim 1 or 6 or 7 or 8 or 9, the ISoCVT communicates with the SPU from the system of claim 1 sending it a request for confirmation of the desire of the FU for carrying out of the specific Transaction with the specific Transaction Data
iv. As soon as the request for confirmation of the Transaction is received, the SPU once it is not established that the sender was not the ISoCVT, authorizes the display to the FU in an easily readable form of the Transaction Data which takes place at least through the Main Display Unit.
v. If the FU desires to proceed with the completion of the Transaction, through the Main Input Unit he introduces into his information system the necessary data (Authorizing Data) which are carried to the SPU authorizing the creation of the Confirmation Data, the Personal Extra Data and the Temporary Extra Data.
vi. The SPU uses the Authorizing Data in order to carry out the necessary authorizing checks. If the authorizing checks are successful the SPU using data which constitute common knowledge of the SPU and the CVT and data which are exclusively stored in its secure storage place and the data it has received in the previous steps, creates the data which are required for the carrying out of the specific Transaction.
vii. The SPU authorizes the sending of the specific data to the ISoCVT. The specific data before they are sent, are properly shaped by the SPU so that at the time they are sent their confidentiality and integrity are ensured.
viii. The ISoCVT on the basis of the information it has in the DB and the data it receives from the communication channel with the ISoFU, proceeds and makes the necessary checks and decides about the outcome of the Transaction (successful/unsuccessful completion) and updates its DB accordingly.
ix. The ISoCVT notifies through the secure channel the ISoPT about the outcome of the Transaction and sends the Temporary Extra Data and the Valid Extra Data or the confirmation of their validity.
x. The ISoCVT sends data to the ISoFU informing about the outcome of the Transaction.
xi. The SPU if it establishes that the sender of the specific data is indeed the ISoCVT authorizes the display to the FU of the specific data in an easily readable form which takes place at least through the Main Display Unit.

12. A method for carrying out internet transactions in which the CVT (in a double role as CVT and PT) and the FU participate and in which the Transaction Data, the Confirmation Data, the Authorizing Data, the Valid Extra Data, the Personal Extra Data and the Temporary Extra Data from system 1 are used. The method comprises the following steps:
i. A check is carried out and if the Storage Unit from the system of claim 1 is not connected to the basic unit it is so connected as to ensure that the applications code which is stored in it is running within the basic unit (the Bridge program).
ii. The FU through the Bridge expresses his desire for the carrying out of a Transaction, shaping the corresponding Transaction Data.
iii. The FU introduces in his information system through the Main Input Unit the necessary Authorizing Data which are carried to the SPU together with the Transaction Data.
iv. The SPU uses the Authorizing Data in order to carry out the necessary authorizing checks and if the checks are successful it creates and shapes properly the Transaction Data, the Confirmation Data, the Personal Extra Data and the Temporary Extra Data so that their confidentiality and integrity may be secured.
v. The data of the previous step are sent to the ISoCVT through the internet communication channel from the system of claim 1 or 6 or 7, or 8 or 9.
vi. The ISoCVT on the basis of the information it has in the DB and the data it receives from the ISoFU proceeds with the necessary checks and decides about the outcome of the Transaction (successful/unsuccessful completion) and updates its DB.
vii. The ISoCVT sends to the ISoFU properly shaped data by which it informs about the outcome of the Transaction.
viii. The SPU if it establishes that the sender of the specific data is indeed the ISoCVT, shapes them accordingly and authorizes their display to the FU in an easily readable form which takes place at least through the Main Display Unit.

13. A method according to claims 10 or 11 or 12 where for an SPU to be able to create the Confirmation Data, it is necessary that before coming into the possession of some FU, a sharing of 2 common secrets with the ISoCVT should be carried out (the Secret and the Key) in a way that will ensure the confidentiality of the common secrets. Furthermore **characterized by** the fact that:
Before the first Transaction is carried out through the use of a specific SPU, its activation procedure is carried out which includes the following steps:
i. Through authorization of the FU, the SPU using and storing a randomly generated initial number (Root) creates a reverse hash chain of a specific length M (Chain) which first element (Member) digitally signs and stores. Subsequently, through the use of the specific digital signature, of the Secret and with appropriate executions of the HASH function, a message is created by SPU which after being encrypted with the use of the Key as the symmetric key of the encryption, is sent to the ISoCVT together with SPU's ID. The message consists of the conjunction || of the digital signature with the
HASH**[**HASH²(Secret) || (digital signature)**]**
ii. The CVT decoding the message extracts the Member which it stores in the DB associating it with the specific SPU. Subsequently, generates a random number and sends to the ISoFU symmetrically encrypted with the Key the following message
HASH**[**HASH1(Secret) || Member**]** || (random number)
and updates the DB storing the random number as the new Key and the
**[**HASH¹(Secret) || Member**]** as the new Secret
iii. As soon as the message is received by the SPU the respective updates to the values of Secret and Key take place and the FU is informed about the successful completion of the activation
In the carrying out of the Transactions:
The message which is sent together with SPU's ID to the ISoCVT confirming the acceptance of the Transaction by the FU, consists of the joining of the Confirmation Data and the Personal and Temporary Extra Data and is encrypted symmetrically with the use of the Key. In the Confirmation Data the element in the Chain which is the sequential of the Member (NE) is used.
The Confirmation Data have the following form
(NE) || HASH
The ISoCVT carries out the necessary checks in order to certify the correctness of the data which are sent by the ISoFU and the ability of completion of the Transaction. If the checks are successful, a random number is generated and subsequently a message is sent to the ISoFU about the successful outcome of the Transaction. The message is symmetrically encrypted with the use of the Key and has the following form
(random number) || HASH
**[**HASH¹(Secret) || (Transaction Data) || (Temporary Extra Data)**]**
Subsequently the ISoCVT proceeds to suitably update the DB about the successful completion of the specific Transaction. Moreover, it updates the DB with the new values regarding the Member, the Key and the Secret which are the NE, the random number and the
**[**HASH¹(Secret) || (Transaction Data) || (Temporary Extra Data)**]**
respectively.
As soon as the message is received by the SPU the stored Member, Secret and Key are respectively updated and the FU is informed about the completion of the specific Transaction.
In the carrying out of the M^{th} Transaction with the use of the Chain, besides the actions and the steps which are executed in the other Transactions:
the SPU using and storing a randomly generated number (new value for the Root) creates a new Chain and its first condition is added to the Personal Extra Data.
In the updating of the DB after the successful conclusion of the Transaction the new value for the Member is the first element of the new Chain.
At the SPU a corresponding updating is carried out about the new value of the Member.

14. A method according to claim 13 where in all the Transaction Data, the ID of the SPU is added and the request for confirmation of the desire of the FU for the carrying out of each Transaction with the corresponding Transaction Data is sent by the ISoCVT to the ISoFU symmetrically encrypted with the Key which corresponds to the FU who carries out the Transaction.
